# EUROPEAN PATENT SPECIFICATION

(11) **EP 3 342 295 B1**
(45) Date of publication and mention of the grant of the patent: **14.08.2019**
(21) Application number: 17208419.6
(22) Date of filing: 19.12.2017
(51) Int. Cl.: A23L 3/18, A23L 3/22, A23L 2/46

(54) **PROCESSING LIQUID FOOD INTO WHICH PARTICLES ARE ADDED**
VERARBEITUNG VON FLÜSSIGEN LEBENSMITTELN, IN DIE PARTIKEL ZUGEGEBEN WERDEN
TRAITEMENT D'ALIMENT LIQUIDE CONTENANT DES PARTICULES

(30) Priority: 30.12.2016 EP 16207594
(43) Date of publication of application: 04.07.2018
(73) Proprietor: Tetra Laval Holdings & Finance S.A., 1009 Pully (CH)
(72) Inventor: TOFFT, Pernilla, SE-24439 KÄVLINGE (SE); JENSINGER, Peter, SE-24466 Furulund (SE)
(74) Representative: Tetra Pak - Patent Attorneys SE

(56) References cited:
- EP-A1- 0 323 654
- GB-A- 1 203 018
- US-A1- 2002 172 745
- US-A1- 2016 113 318
- US-A1- 2016 128 374

## Description

### Technical Field

The invention is strictly defined by the appended claims and relates to a method for processing liquid food into which particles are added.

### Background Art

Processing of many types of liquid food is often performed in a processing system that comprises a blender and a heat treatment unit. The blender blends water and food concentrate into liquid food. The liquid food is then subjected to heat treatment in the heat treatment unit, e.g. in the form of a heat exchanger, in order to obtain a desired heat treatment effect of the liquid food. The heat treatment effect provides killing or at least reduction of microorganisms in the liquid food and to an extent where the number of viable pathogens is so low that that they are unlikely to cause disease, as long as the liquid food is stored as prescribed and is consumed before its expiration date.

For some types of liquid food it is also desired to add particles into the liquid food. Some examples of such liquid food are juices and still drinks, which may include particles in form of fiber (pulp), fruit and/or vegetable pieces. The particles may have varying sizes, such as an average size of between 0,1 mm and 10 mm. Particles in form of fibers may be 1 mm to 20 mm long, and may be less than 1 mm wide.

In many of these types of liquid food with particles it is important to maintain the mechanical characteristics of the particles throughout the processing including the heat treatment. That is, a problem inherent in processing of liquid food having particles is that of minimizing the maceration of the particles. Needless to say, in case the particles in the liquid food are macerated, consumers will perceive the liquid food as having a poor quality.

The prior art has provided solutions to the problem of how to reduce maceration of particles in liquid food that essentially involve two separate processing lines - a first line in which the blend of water and food concentrate is heat treated and a second line in which particles are heat treated, followed by blending of the flow of liquid food and the particles in the two lines. However, such solutions have drawbacks including an increased cost in terms of the additional hardware needed to realize two separate processing lines, as well as an added cost for providing energy to two separate processing lines. Further prior art is reflected in patent documents GB1203018A, US2016/113318A1 and US2016/128374A1.

### Summary

It is an object of the invention to at least partly overcome one or more of the above-identified limitations of the prior art related to processing of liquid food. In particular, it is an object to at least mitigate drawbacks related to processing of liquid food into which particles are added.

Such an object is achieved by a method according to the appended claims.

In connection with the method a system for processing liquid food is described. The system comprises a blender, a heat treatment unit and a control unit. The blender is configured to receive a flow of water and a flow of food concentrate. The blender is further configured to blend, according to a recipe provided by the control unit, the received water and the received food concentrate to liquid food and provide the liquid food to the heat treatment unit.

The heat treatment unit is configured to receive the liquid food from the blender and receive a flow of particles into a flow of liquid food inside the heat treatment unit such that liquid food comprising particles is formed. The heat treatment unit is further configured to heat treat the liquid food comprising particles.

In other words, at least due to the fact that the system is configured such that the flow of particles is received into the flow of liquid food inside the heat treatment unit, there is no need for two separate processing lines for the blend of water plus concentrate and the flow of particles, respectively.

The heat treatment unit may comprise an inlet for the liquid food, an outlet for the liquid food comprising particles and a flow path that extends from the inlet to the outlet. A particle inlet may be connected to the flow path, for enabling introduction of the flow of particles in the flow path. The particle inlet may be arranged to enable introduction of the flow of particles at at least one location along the flow path based on the amount of heat that is needed to obtain heat treatment of the particles in the flow of liquid food comprising particles.

Such configurations of the system enable, in addition to the advantages as summarized above, a minimization of the maceration of the particles in the liquid food that may take place due to the heat treatment. That is, the system may be configured such that the particle introduction location along the flow path inside the heat treatment unit may be at a point that is optimal in terms of heat treatment of the particles and optimal in terms of minimal maceration of the particles.

According to the invention, the object of at least mitigate drawbacks related to processing of liquid food into which particles are added is achieved by a method for processing liquid food in a system comprising a blender, a pasteurizer and a control unit. The method comprises providing a flow of water and a flow of food concentrate to the blender. The received water and the received food concentrate are blended, according to a recipe provided by the control unit, into liquid food, and the liquid food is then provided to the pasteurizer. A flow of particles is provided to the pasteurizer, into liquid food inside the pasteurizer such that liquid food comprising particles is formed inside the pasteurizer. The liquid food comprising particles is heat treated in the pasteurizer.

The provision of the flow of particles to the pasturizer may comprise providing the flow of particles at at least one location along a flow path for the liquid food in the pasteurizer. The location may be selected based on the amount of heat that is needed to obtain heat treatment of the particles in the flow of liquid food comprising particles.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematically illustrated block diagram of a system for processing liquid food,
Fig. 2 is a flowchart of a method for processing liquid food, and
Fig. 3 is a flowchart that illustrates embodiments of the method in Fig. 2. The system as such does not form part of the invention.

### Detailed Description

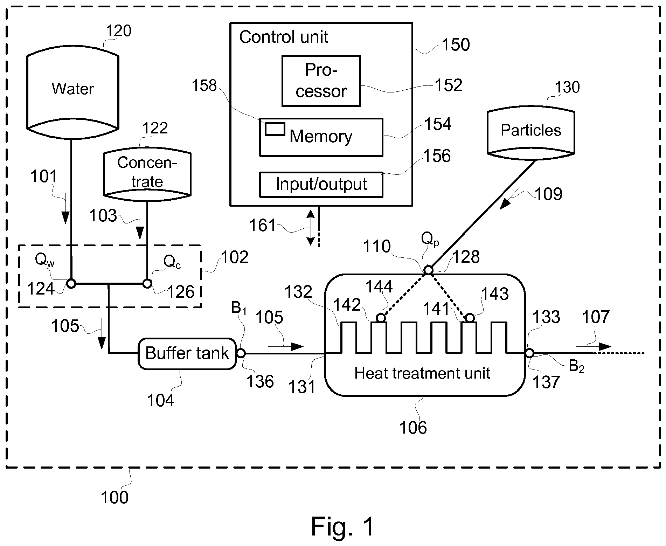

With reference to **Fig. 1** a system 100 for processing liquid food 105 is illustrated. The system 100 comprises a blender 102, a heat treatment unit (e.g. a pasteurizer) 106 and a control unit 150. The blender 102 is configured to receive a flow of water 101, for example from a water tank 120, and configured to receive a flow of food concentrate 103, for example from a concentrate tank 122. The blender 102 is further configured to blend, according to a recipe 158 provided by the control unit 150, the received water 101 and the received food concentrate 103 to liquid food 105. The blender 102 is also configured to provide the liquid food 105 to the heat treatment unit 106.

The blender 102 may comprise flow regulating and flow rate sensing arrangements 124, 126 (e.g. valves, flow sensors etc.) that are configured to be controlled by the control unit 150 via control signals 161 such that the flow Q_{w} of water 101 and the flow Q_{c} of concentrate 103 can be regulated and monitored. Blending water and concentrate into liquid food may then be accomplished by regulating the flow Q_{w} of water 101 and the flow Q_{c} of concentrate 103 in accordance with the recipe 158.

The heat treatment unit 106 is configured to receive the liquid food 105 from the blender 102, for example via a buffer tank 104. The heat treatment unit 106 is further configured to receive, for example from a particle tank 130, a flow of particles 109 into a flow of liquid food 105 inside the heat treatment unit 106, such that liquid food comprising particles 107 is formed, i.e. the flow of particles 109 and the flow of liquid food 105 are blended inside the heat treatment unit 106. The heat treatment unit 106 is also configured to heat treat the liquid food comprising particles 107.

The heat treatment unit 106 may comprise an inlet 131 for the liquid food 105 and an outlet 133 for the liquid food comprising particles 107. A flow path 132 extends from the inlet 131 to the outlet 133. A particle inlet 110 is connected to the flow path 132 for enabling introduction of the flow of particles 109 in the flow path 132. Such a particle inlet 110 may be arranged to enable introduction of the flow of particles 109 at at least one location 141, 142 along the flow path 132. This location 141, 142 is selected based on the amount of heat that is needed to obtain heat treatment of the particles 109 in the flow of liquid food comprising particles 107. It is to be noted that, as the skilled person will realize, the flow of liquid food 105 that does not comprise particles may be subjected to heat treatment inside the heat treatment unit 106 between the inlet 131 and the location 141, 142 at which particles are introduced.

The closer the location 141, 142 is to the inlet 131, the more heat treatment will be performed on the particles in the flow of particles 109. However, particle maceration will increase when the location 141, 142 is closer to the inlet 131.

The heat treatment unit 106 may comprise a flow regulating and flow rate sensing arrangement 128 (e.g. valves, flow sensors etc.) that are configured to be controlled by the control unit 150 via control signals 161 such that the flow Qₚ of particles 109 can be regulated and monitored. Moreover, this flow regulating and flow rate sensing arrangement 128 may be further configured to select, when there are two locations 141, 142 where the flow of particles 109 may be introduced, at which of these locations 141, 142 the flow of particles 109 shall be introduced. The selection may be accomplished by a valve and piping arrangement that directs the flow of particles 109.

If only one location 141 is used for introducing the flow of particles 109, the introduction may be accomplished by piping that is connected to the flow path 132 inside the heat treatment unit 106.

Exactly how a connection at a location 141, 142 of the flow path 132 is accomplished depends on which type of heat treatment unit 106 is used. Still, the same principle applies for all types, i.e. an opening into the flow path 132 of the heat treatment unit 106 is made, and e.g. a pipe is connected to this opening, for example by welding. The pipe can then convey the flow of particles 109 into the flow path 132.

The particle inlet 110 may be arranged to enable introduction of the particles 109 at a first location 141 in the flow path 132 and arranged to enable introduction of the particles 109 at a second location 142 in the flow path 132. The second location 142 is positioned upstream the first location 141 in the flow path 132. The heat treatment unit 106 may be configured to receive particles having a first set of properties at the first location 141 and a second set of properties at the second location 142. The first location 141 and the second location 142 may be realized in the form of, e.g., suitably arranged valves 143, 144 at the flow path 132, such valves being configured to being operated, e.g., in conjunction with the flow regulating and flow rate sensing arrangement 128 introduced above.

The first set of properties for the particles may comprise a first average particle size or mass, and the second set of properties for the particles may comprise a second average particle size or mass that is larger than the first average particle size or mass, respectively.

The control unit 150 may be configured to direct the flow of particles 109 to one of the first and second locations 141, 142 based on the amount of heat that is needed to obtain heat treatment of the particles in the flow of liquid food comprising particles 107. The amount of heat needed to properly heat treat the particles may be empirically determined and depends on particle size. For example, if the liquid food is orange juice and the particles are pulp fibers, which are relatively large and thus require more heat treatment, then the flow of particles 109 is directed to the location 142 closer to the inlet 131. If the liquid food is apple juice and the particles are apple fibers, which are relatively smaller and thus require less heat treatment, then the flow of particles 109 is directed to the location 141 further away from the inlet 131.

If only one inlet to the flow path 132 in the heat treatment unit 106 is used, then this location is selected based on which type of particles is used in the flow of particles 109. Obviously, such selection is then fixed. Still, the same principle applies, i.e. the location is selected based on the amount of heat that is needed to obtain heat treatment of the particles 109, while still selecting the location to be as far away from the inlet 131 as possible so that unnecessary particle maceration may be avoided.

The control unit 150 may comprise a processor 152, memory 154 and input/output circuitry 156 that may operate in conjunction with each other following software instructions stored in the memory 154. As illustrated, the recipe 158 may also be stored in the memory 154. The control unit 150 is per se a conventional control unit of a type that is commonly used in the liquid food processing industry. Control functionally has then been implemented in the unit 150 for providing the functionality of the system 100 described herein.

Although not shown, the system 100 comprises conventional pumps and valves for providing the flow of water 101, the flow of food concentrate 103, the flow of particles 109 as well as for transporting the liquid food before and after particles are added. Also, a heating media is provided to the heat treatment unit 106, just as for any pasteurizer that is used within the field of liquid food processing.

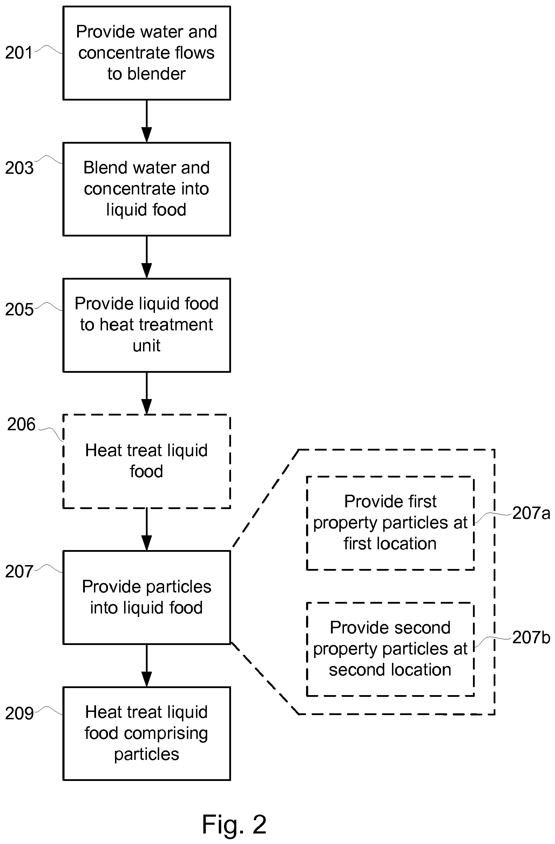

Turning now to **Fig. 2****,** and with continued reference to Fig. 1, a method for processing liquid food in a system 100 comprising a blender 102, a heat treatment unit 106 and a control unit 150, will be described in terms of a number of actions. According to the invention, the heat treatment unit 106 is a pasteurizer. The method may be performed by the system 100 and control functionality may be implemented as software instructions stored in the memory 154 in the control unit 150 and, as already indicated above, control and monitoring signals 161 may be provided and received to and from various regulating and sensing arrangements in the system 100, including the blender 102 and heat treatment unit 106.

In the method, which, by way of example, is described with reference to the system 100 of Fig. 1, a flow of water 101 and a flow of food concentrate 103 are provided 201 to the blender 102.

The received water 101 and the received food concentrate 103 is blended 203, according to the recipe 158 provided by the control unit 150, into liquid food 105. The providing 201 of water and concentrate and the blending 203 may be understood as separate actions as well as one, integrated action.

The liquid food 105 is provided 205 to the heat treatment unit 106.

A flow of particles 109 is provided 207 to the heat treatment unit 106, into liquid food 105 that was provided to, i.e. is located inside, the heat treatment unit 106, such that liquid food comprising particles 107 is formed inside the heat treatment unit 106.

The liquid food comprising particles 107 is then heat treated (pasteurized) 209 in the heat treatment unit 106.

As indicated by a heat treatment (pasteurization) action 206, the flow of liquid food 105 that does not comprise particles may be subject to full or partial heat treatment inside the heat treatment unit 106 prior to the action in which particles are provided 207. Thus, before action 207, the method may comprise at least partially heat treating 206, in the heat treatment unit 106, the liquid food 105. This is due to that the liquid food 105 might have already passed a distance in the heat treatment unit 106 before the providing 207 of particles.

Heat treating means that any microorganisms in heat treated substance (food) are killed or at least reduced to an extent where the number of viable pathogens is so low that that they are unlikely to cause disease, as long as the substance is stored as prescribed and is consumed before its expiration date.

The provision 207 of the flow of particles 109 to the heat treatment unit 106 may comprise providing 207 the flow of particles 109 at at least one location 141, 142 along a flow path 132 for the liquid food 105 in the heat treatment unit 106, where the location 141, 142 is selected based on the amount of heat that is needed to obtain heat treatment of the particles 109 in the flow of liquid food comprising particles 107. In practice, the selection of the location may part of a design process, where the location is fix for all types of particles that are provided to the heat treatment unit 106.

Also, the providing 207 of the flow of particles 109 to the heat treatment unit 106 may comprise providing 207 the flow of particles at one of a first location 141 and a second location 142 to the flow path 132, the second location 142 being located upstream the first location 141. The selection of the location 141, 142 may be done as part of a configuration of the method and the system 100, e.g. by an operator, prior to the actual execution of the method.

The providing 207 of the flow of particles 109 in the heat treatment unit 106 may comprise providing 207a, if the particles in the flow of particles 109 have a first set of properties, the flow of particles 109 at the first location 141, and providing 207b, if the particles in the flow of particles 109 have a second set of properties, the flow of particles 109 at the second location 142. For example, the first set of properties for the particles may comprises a first average particle size or mass, and the second set of properties for the particles may comprise a second average particle size or mass that is larger than the first average particle size or mass, respectively.

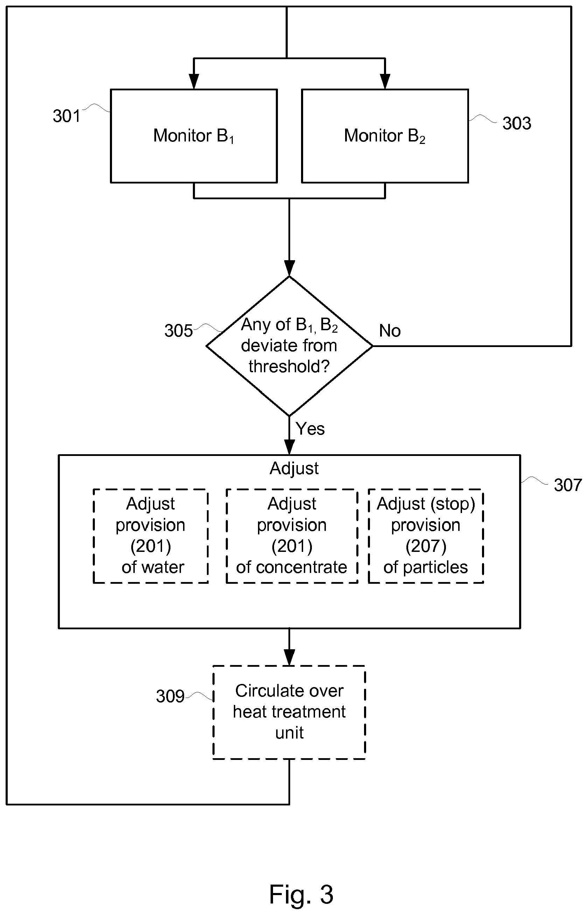

As exemplified in **Fig. 3****,** the method for processing liquid food 105 may comprise further actions. For example, the method may comprise monitoring 301 a sugar content B₁ of the liquid food 105 provided to the heat treatment unit 106 in the provision action 205. A sugar content B₂ of the liquid food comprising particles 107 may also be monitored 303. If 305 any of the monitored 301, 303 sugar contents B₁, B₂ deviates from a predetermined threshold value, an adjustment 307 may be done of any of the provision 201 of the flow of water 101, the provision 201 of the flow of food concentrate 103, and the provision 207 of the flow of particles 109. The monitoring 301, 303 of the sugar contents B₁ and B₂ may be realized via the control and monitoring signals 161 communicated between the control unit 150 and sugar content sensors 136, 137, respectively.

The adjustment 307 of the provision 207 of particles 109 may comprise stopping the providing 207 of particles 109, i.e. stopping the flow of particles 109 to the heat treatment unit 106. In such an example, the method may comprise circulating 309, via a circulation line (not shown), the liquid food comprising particles 107 over the heat treatment unit 106.

In other words, Fig. 3 illustrates examples where the system 100 ensures that a desired sugar content of the final product, i.e. the liquid food comprising particles 107, can be maintained without wasting unnecessary amounts of particles that would have become macerated if they were still introduced in the heat treatment unit and circulated over the heat treatment unit 106. The circulation 309 is stopped and normal operation is continued when, in action 305, the monitored 301, 303 sugar contents B₁, B₂ are within their predetermined threshold values.

## Claims

1. A method for processing liquid food (105) in a system (100) comprising a blender (102), a pasteurizer (106) and a control unit (150), the method comprising
providing (201) a flow of water (101) and a flow of food concentrate (103) to the blender (102),
blending (203), according to a recipe (158) provided by the control unit (150), the received water (101) and the received food concentrate (103) into liquid food (105),
providing (205) the liquid food (105) to the pasteurizer (106),
providing (207) a flow of particles (109) to the pasteurizer (106), into liquid food (105) inside the pasteurizer (106) such that liquid food comprising particles (107) is formed inside the pasteurizer (106), and
heat treating (209), in the pasteurizer (106), the liquid food comprising particles (107).

2. The method according to claim 1, wherein the providing (207) of the flow of particles (109) to the pasteurizer (106) comprises
providing the flow of particles (109) at at least one location (141, 142) along a flow path (132) for the liquid food (105) in the pasteurizer (106), where the location (141, 142) is selected based on the amount of heat that is needed to obtain heat treatment of the particles (109) in the flow of liquid food comprising particles (107).

3. The method according to claim 2, wherein the providing (211) of the flow of particles (109) to the pasteurizer (106) comprises
providing the flow of particles at one of a first location (141) and a second location (142) to the flow path (132), the second location (142) being located upstream the first location (141).

4. The method (100) according to claim 3 , wherein the providing (207) of the flow of particles (109) in the pasteurizer (106) comprises
providing (207a), if the particles in the flow of particles (109) have a first set of properties, the flow of particles (109) at the first location (141), and
providing (207b), if the particles in the flow of particles (109) have a second set of properties, the flow of particles (109) at the second location (142).

5. The method according to claim 4, wherein
the first set of properties for the particles comprises a first average particle size or mass, and
the second set of properties for the particles comprises a second average particle size or mass that is larger than the first average particle size or mass, respectively.

6. The method according to any of claims 1 to 5, comprising
monitoring (301) a sugar content (B₁) of the liquid food (105) provided (205) to the pasteurizer (106),
monitoring (303) a sugar content (B₂) of the liquid food comprising particles (107), and
if (305) any of the monitored sugar contents (B₁, B₂) deviates from a predetermined threshold value, adjusting (307) any of
- the providing (201) of the flow of water (101),
- the providing (201) of the flow of food concentrate (103), and
- the providing (207) of the flow of particles (109).

## Patentansprüche

1. Verfahren zur Verarbeitung von flüssigen Lebensmitteln (105) in einem System (100), das einen Mischer (102), eine Pasteurisiervorrichtung (106) und eine Steuereinheit (150) umfasst, wobei das Verfahren umfasst:
Zuführen (201) eines Stroms von Wasser (101) und eines Stroms von Lebensmittelkonzentrat (103) zu dem Mischer (102),
Mischen (203) des erhaltenen Wassers (101) und des erhaltenen Lebensmittelkonzentrats (103) gemäß einer von der Steuereinheit (150) bereitgestellten Rezeptur (158) zu einem flüssigen Lebensmittel (105),
Zuführen (205) des flüssigen Lebensmittels (105) zu der Pasteurisiervorrichtung (106),
Zuführen (207) eines Stroms von Partikeln (109) zu der Pasteurisiervorrichtung (106) in das flüssige Lebensmittel (105) in der Pasteurisiervorrichtung (106), so dass in der Pasteurisiervorrichtung (106) flüssiges Lebensmittel, das Partikel umfasst (107), gebildet wird, und
Wärmebehandeln (209) des flüssigen Lebensmittels, das Partikel umfasst (107), in der Pasteurisiervorrichtung (106).

2. Verfahren gemäß Anspruch 1, wobei das Zuführen (207) des Stroms von Partikeln (109) zu der Pasteurisiervorrichtung (106) umfasst:
Zuführen des Stroms von Partikeln (109) an wenigstens einer Stelle (141, 142) entlang des Strömungswegs (132) des flüssigen Lebensmittels (105) in der Pasteurisiervorrichtung (106), wobei die Stelle (141, 142) auf der Grundlage der Menge an Wärme ausgewählt wird, die benötigt wird, um Wärmebehandlung der Partikel (109) in dem Strom von flüssigem Lebensmittel, das Partikel umfasst (107), zu erzielen.

3. Verfahren gemäß Anspruch 2, wobei das Zuführen (211) des Stroms von Partikeln (109) zu der Pasteurisiervorrichtung (106) umfasst:
Zuführen des Stroms von Partikeln an einer von einer ersten Stelle (141) und einer zweiten Stelle (142) zu dem Strömungsweg (132), wobei die zweite Stelle (142) stromaufwärts bezogen auf die erste Stelle (141) angeordnet ist.

4. Verfahren (100) gemäß Anspruch 3, wobei das Zuführen (207) des Stroms von Partikeln (109) zu der Pasteurisiervorrichtung (106) umfasst:
wenn die Partikel in dem Strom von Partikeln (109) einen ersten Satz von Eigenschaften aufweisen, Zuführen (207a) des Stroms von Partikeln (109) an der ersten Stelle (141) und
wenn die Partikel in dem Strom von Partikeln (109) einen zweiten Satz von Eigenschaften aufweisen, Zuführen (207b) des Stroms von Partikeln (109) an der zweiten Stelle (142).

5. Verfahren gemäß Anspruch 4, wobei
der erste Satz von Eigenschaften der Partikel eine erste mittlere Partikelgröße oder -masse umfasst und
der zweite Satz von Eigenschaften der Partikel eine zweite mittlere Partikelgröße oder -masse umfasst, die größer als die erste mittlere Partikelgröße bzw. -masse ist.

6. Verfahren gemäß einem der Ansprüche 1 bis 5, umfassend
Überwachen (301) des Zuckergehalts (B₁) des flüssigen Lebensmittels (105), das der Pasteurisiervorrichtung (106) zugeführt wird (205),
Überwachen (303) des Zuckergehalts (B₂) des flüssigen Lebensmittels, das Partikel umfasst (107), und
wenn (305) einer der beobachteten Zuckergehalte (B₁, B₂) von einem vorbestimmten Schwellenwert abweicht, Einstellen (307) von einem von
- dem Zuführen (201) des Stroms von Wasser (101),
- dem Zuführen (201) des Stroms von Lebensmittelkonzentrat (103) und
- dem Zuführen (207) des Stroms von Partikeln (109).

## Revendications

1. Procédé de traitement d'un aliment liquide (105) dans un système (100) comprenant un mélangeur (102), un pasteurisateur (106) et une unité de commande (150), le procédé comprenant
l'introduction (201) d'un courant d'eau (101) et d'un courant de concentré alimentaire (103) dans le mélangeur (102),
le mélange (203), selon une recette (158) fournie par l'unité de commande (150), de l'eau reçue (101) et du concentré alimentaire reçu (103) en un aliment liquide (105),
l'introduction (205) de l'aliment liquide (105) dans le pasteurisateur (106),
l'introduction (207) d'un courant de particules (109) dans le pasteurisateur (106), dans l'aliment liquide (105) à l'intérieur du pasteurisateur (106) de telle sorte qu'un aliment liquide comprenant des particules (107) se forme à l'intérieur du pasteurisateur (106), et
le traitement thermique (209), dans le pasteurisateur (106), de l'aliment liquide comprenant des particules (107).

2. Procédé selon la revendication 1, dans lequel l'introduction (207) du courant de particules (109) dans le pasteurisateur (106) comprend
l'introduction du courant de particules (109) à au moins un emplacement (141, 142) le long d'un passage (132) pour l'aliment liquide (105) dans le pasteurisateur (106), l'emplacement (141, 142) étant choisi sur la base de la quantité de chaleur qui est nécessaire pour obtenir un traitement thermique des particules (109) dans le courant d'aliment liquide comprenant des particules (107).

3. Procédé selon la revendication 2, dans lequel l'introduction (211) du courant de particules (109) dans le pasteurisateur (106) comprend
l'introduction du courant de particules à un premier emplacement (141) ou un deuxième emplacement (142) sur le passage (132), le deuxième emplacement (142) étant situé en amont du premier emplacement (141) .

4. Procédé (100) selon la revendication 3, dans lequel l'introduction (207) du courant de particules (109) dans le pasteurisateur (106) comprend
l'introduction (207a), si les particules dans le courant de particules (109) ont un premier ensemble de propriétés, du courant de particules (109) au premier emplacement (141), et
l'introduction (207b), si les particules dans le courant de particules (109) ont un deuxième ensemble de propriétés, du courant de particules (109) au deuxième emplacement (142).

5. Procédé selon la revendication 4, dans lequel
le premier ensemble de propriétés pour les particules comprend une première taille ou masse moyenne de particules, et
le deuxième ensemble de propriétés pour les particules comprend une deuxième taille ou masse moyenne de particules qui est plus grande que la première taille ou masse moyenne de particules, respectivement.

6. Procédé selon l'une quelconque des revendications 1 à 5, comprenant
la surveillance (301) d'une teneur en sucre (B₁) de l'aliment liquide (105) introduit (205) dans le pasteurisateur (106),
la surveillance (303) d'une teneur en sucre (B₂) de l'aliment liquide comprenant des particules (107), et
si (305) l'une quelconque des teneurs en sucre surveillées (B₁, B₂) s'écarte d'une valeur seuil prédéterminée, le réglage (307) d'une quelconque opération parmi
- l'introduction (201) du courant d'eau (101),
- l'introduction (201) du courant de concentré alimentaire (103), et
- l'introduction (207) du courant de particules (109) .
